# FASCICULE DE BREVET EUROPEEN

(11) **EP 4 685 057 B1**
(45) Date de publication et mention de la délivrance du brevet: **02.09.2026**
(21) Numéro de dépôt: 25188488.8
(22) Date de dépôt: 09.07.2025
(51) Int. Cl.: B64D 37/00, B64D 37/16, B64D 37/32, B64D 41/00, B64D 45/00, B64F 5/60

(54) **PROCEDE ET DISPOSITIF DE SURVEILLANCE D'UN EQUIPEMENT D'UN CIRCUIT D ALIMENTATION EN CARBURANT D'UN GROUPE AUXILIAIRE DE PUISSANCE D'UN AERONEF**
VERFAHREN UND VORRICHTUNG ZUR ÜBERWACHUNG EINER KRAFTSTOFFVERSORGUNGSANLAGE EINES FLUGZEUGHILFSTRIEBWERKS
METHOD AND DEVICE FOR MONITORING A FUEL SUPPLY CIRCUIT EQUIPMENT OF AN AIRCRAFT AUXILIARY POWER UNIT

(30) Priorité: 22.07.2024 FR 2408048
(43) Date de publication de la demande: 28.01.2026
(73) Titulaire: AIRBUS OPERATIONS (S.A.S.), 31060 Toulouse (FR)
(72) Inventeur: CAILLOL, Thomas, 31060 TOULOUSE Cedex 9 (FR)
(74) Mandataire: Airbus-OPS SAS

(56) Documents cités:
- CA-A1- 3 025 374
- FR-A1- 3 130 900
- US-B2- 12 006 058

## Description

### DOMAINE TECHNIQUE

Le domaine de la présente divulgation concerne la surveillance d'un équipement appartenant à un circuit d'alimentation en carburant d'un groupe auxiliaire de puissance d'un aéronef. En particulier, l'invention concerne la surveillance d'un pressostat d'une conduite de ravitaillement appartenant au circuit d'alimentation en carburant du groupe auxiliaire de puissance.

### ETAT DE LA TECHNIQUE ANTERIEURE

Dans le domaine de l'aéronautique, un groupe auxiliaire de puissance ou APU (acronyme anglais de « Auxiliary *Power Unit* ») désigne un générateur électrique qui fournit de l'énergie pour des fonctions autres que la propulsion. Notamment, il est destiné à démarrer les systèmes de propulsion principaux et à produire de l'énergie à bord des aéronefs pour alimenter électriquement au sol différents systèmes de bord (e.g. système d'éclairage de la cabine, climatisation, ventilation, etc.) quand ces systèmes de propulsion principaux sont à l'arrêt.

Un APU est généralement alimenté en carburant *via* un circuit d'alimentation en carburant qui achemine le carburant depuis des réservoirs de l'aéronef. De tels réservoirs sont, par exemple, un réservoir principal interne gauche situé dans l'aile gauche de l'aéronef, ou bien un réservoir dit « de compensation » (« *trim tank* » en anglais) situé dans l'empennage de l'aéronef. Sans sortir du cadre de l'invention, le réservoir principal peut aussi correspondre à un réservoir principal interne droit situé dans l'aile droite de l'aéronef. Le réservoir de compensation a pour rôle de permettre de maintenir la position du centre de gravité de l'aéronef au centre de portance, selon les paramètres de vol et les masses transportées, par remplissage en carburant depuis les réservoirs principaux (e.g., réservoirs internes gauche ou droit) ou par vidange du carburant dans ceux-ci.

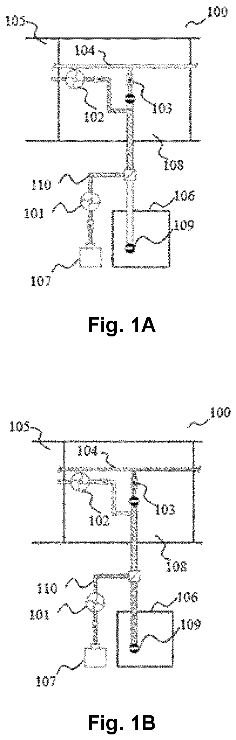

L'alimentation en carburant de l'APU est régie selon différents modes de fonctionnement dépendant de l'état opérationnel de l'aéronef. Les figures 1A et 1B illustrent schématiquement des exemples d'alimentation en carburant de l'APU selon différents modes de fonctionnement.

Classiquement, le circuit d'alimentation en carburant 100 d'un APU 107 comprend une première pompe 101 positionnée au niveau d'une conduite de carburant 110 de l'APU 107. La première pompe 101 est apte à acheminer le carburant depuis une partie d'une conduite de ravitaillement 104 alimentant en carburant un réservoir de compensation 106 jusqu'à l'APU 107. Le circuit d'alimentation en carburant 100 comprend en outre une deuxième pompe 102 apte à acheminer le carburant depuis un réservoir principal interne gauche 105 de l'aéronef vers une partie de la conduite de ravitaillement 104 jusqu'à l'APU 107. Le circuit d'alimentation en carburant 100 comprend en outre un pressostat 103 (ou « *pressure switch* » en anglais) positionné au niveau de la conduite de ravitaillement 104. Ce pressostat 103 est apte à mesurer une pression du carburant dans la conduite de ravitaillement 104 et à transmettre un signal électrique lorsqu'un certain seuil de pression du carburant circulant dans la conduite de ravitaillement 104 a été atteint.

Dans un premier mode de fonctionnement dit « fonctionnement au sol » (voir figure 1A), l'APU 107 est alimenté en carburant depuis un réservoir principal interne gauche 105 grâce à la deuxième pompe 102 de l'aéronef. Le carburant circule alors depuis ce réservoir principal interne gauche 105 vers la conduite de ravitaillement 104 alimentant le réservoir de compensation 106, puis vers la conduite de carburant 110 et l'APU 107. Ce mode de fonctionnement est généralement utilisé lors d'opérations classiques de l'aéronef au sol (e.g., pendant l'embarquement des passagers).

Dans un deuxième mode de fonctionnement dit de « ravitaillement du réservoir de compensation » (figure 1B), lorsque l'aéronef est au sol, l'APU 107 est alimenté en carburant *via* la conduite de ravitaillement en carburant 104 pendant le remplissage en carburant du réservoir de compensation 106. Plus spécifiquement, lorsque le réservoir de compensation 106 est ravitaillé en carburant, une vanne d'entrée 109 du réservoir de compensation 106 est alors ouverte pour faire entrer le carburant dans ce réservoir de compensation 106. Une partie de ce carburant destiné au réservoir de compensation 106 est alors pompée par la première pompe 101 dans la conduite de ravitaillement 104 et/ou directement dans le réservoir de compensation 106 pour alimenter en carburant l'APU 107.

Lorsque le pressostat 103 détecte une pression inférieure à un seuil prédéterminé dans la conduite de ravitaillement 104, il transmet un signal électrique afin de faire basculer le circuit d'alimentation en carburant 100 d'un mode de fonctionnement « ravitaillement du réservoir de compensation » à un mode de fonctionnement « fonctionnement au sol ». En effet, pendant l'opération de ravitaillement du réservoir de compensation 106, une pression trop basse dans la conduite de ravitaillement 104 signifie que la première pompe 101 pompe plus de carburant qu'il n'y en a dans la conduite de ravitaillement 104 du réservoir de compensation 106. En conséquence, non seulement l'opération de ravitaillement du réservoir de compensation 106 est compromise, mais l'APU 107 risque de ne plus être alimenté en carburant et donc de s'arrêter pendant l'opération de ravitaillement du réservoir de compensation. Le basculement vers le mode de fonctionnement « fonctionnement au sol » permet de ne pas laisser la première pompe 101 vider la conduite de ravitaillement 104 du réservoir de compensation 106 car elle pourrait sinon éventuellement pomper de l'air si le réservoir de compensation 106 ne contenait plus suffisamment de carburant, ce qui engendrerait un arrêt de l'APU 107.

Afin d'éviter un arrêt de l'APU 107 dans le mode de fonctionnement « ravitaillement du réservoir de compensation », il est souhaitable de surveiller le bon fonctionnement du pressostat 103 afin de ne pas laisser le circuit d'alimentation en carburant 100 dans le mode de fonctionnement dit de « ravitaillement du réservoir de compensation » lorsqu'il n'y a plus assez de carburant dans la conduite de ravitaillement 104 et/ou dans le réservoir de compensation 106.

Le pressostat 103 n'est pas un équipement surveillé de manière native (i.e., aucune donnée directe en provenance de capteurs pour surveiller cet équipement n'est reçue et analysée).

Il est alors souhaitable de pallier cet inconvénient de l'état de la technique.

Il est notamment souhaitable de fournir une solution qui permette de surveiller un équipement, tel qu'un pressostat, d'un circuit d'alimentation en carburant d'un APU, notamment pendant des opérations de ravitaillement d'un réservoir de compensation d'un aéronef.

Le document FR3130900A1 divulgue un dispositif de gestion de carburant embarqué agencé pour détecter le niveau de carburant dans un réservoir de compensation utilisé pour alimenter un groupe auxiliaire de puissance. Le document US12006058B2 divulgue un circuit d'alimentation en carburant pour un groupe auxiliaire de puissance.

### EXPOSE DE L'INVENTION

Il est proposé ici un procédé de surveillance d'un équipement d'un circuit d'alimentation en carburant d'un groupe auxiliaire de puissance d'un aéronef. Ce procédé est implémenté par un dispositif de surveillance sous forme de circuiterie électronique. Ce procédé comprend :
- déterminer si le circuit d'alimentation en carburant a été, au cours d'une période prédéterminée, dans une configuration telle que les conditions suivantes ont été remplies :
   (i) le groupe auxiliaire de puissance était dans un état opérationnel « allumé », et,
   (ii) le circuit d'alimentation en carburant était dans un mode de fonctionnement dit de « ravitaillement d'un réservoir de compensation », et
   (iii) le réservoir de compensation avait un statut de remplissage en carburant dit « vide »,
- et à chaque fois que le circuit d'alimentation en carburant a été dans ladite configuration, déterminer une durée pendant laquelle ladite configuration a été maintenue et, lorsque ladite durée déterminée est supérieure à un premier seuil prédéterminé, alors enregistrer un évènement indiquant que ladite durée déterminée a été supérieure au premier seuil prédéterminé,
- déterminer, pour ladite période prédéterminée, un nombre d'évènements enregistrés, et si ledit nombre d'évènements déterminé est supérieur à un deuxième seuil prédéterminé, alors générer un message d'alerte.

Ainsi, il est possible de surveiller de manière indirecte un équipement d'un circuit d'alimentation en carburant de l'APU, tel qu'un pressostat, qui n'est pas nativement surveillé. Il est ainsi possible d'émettre un message d'alerte lorsque cet équipement nécessite une action et/ou une planification de maintenance grâce à la surveillance d'un paramètre tel que la durée d'une configuration particulière du circuit d'alimentation en carburant de l'APU.

Selon un mode de réalisation, le message d'alerte comprend une demande de maintenance dudit équipement à effectuer et/ou à planifier.

Selon un mode de réalisation, le procédé comprend en outre :
- collecter des premières données, représentatives dudit état opérationnel dudit groupe auxiliaire de puissance pendant ladite période prédéterminée, lesdites premières données étant des mesures de vitesse de rotation du groupe auxiliaire de puissance, et déterminer que ledit groupe auxiliaire de puissance est dans l'état opérationnel dit « allumé » lorsqu'une mesure de vitesse de rotation est supérieure à 0,
- collecter des deuxièmes données, représentatives dudit mode de fonctionnement dudit circuit d'alimentation en carburant pendant ladite période prédéterminée, lesdites deuxièmes données étant un statut d'une vanne d'entrée du réservoir de compensation, et déterminer que le mode de fonctionnement est « ravitaillement du réservoir de compensation », lorsque le statut de la vanne d'entrée est « ouvert »,
- collecter des troisièmes données, représentatives dudit statut de remplissage en carburant du réservoir de compensation pendant ladite période prédéterminée, lesdites troisièmes données étant des mesures de quantité de carburant dans le réservoir de compensation, et déterminer que le statut du réservoir est « vide » lorsque la quantité de carburant est inférieure à un seuil prédéterminé de quantité de carburant.

Dans un mode de réalisation, l'étape d'enregistrement d'un événement indiquant que ladite durée déterminée a été supérieure au premier seuil prédéterminé est mise en œuvre de façon à enregistrer au plus un seul événement pour une même utilisation de l'aéronef.

Il est également proposé ici un procédé de maintenance d'un équipement d'un circuit d'alimentation en carburant d'un groupe auxiliaire de puissance d'un aéronef comprenant :
- surveiller ledit équipement selon le procédé de surveillance tel que décrit précédemment,
- effectuer et/ou planifier une maintenance sur ledit équipement quand un message d'alerte est généré par exécution du procédé de surveillance tel que décrit précédemment.

Il est également proposé ici un dispositif de surveillance d'un équipement d'un circuit d'alimentation en carburant d'un groupe auxiliaire de puissance d'un aéronef. Ce dispositif de surveillance comprend de la circuiterie électronique configurée pour :
- déterminer si le circuit d'alimentation en carburant a été, au cours d'une période prédéterminée, dans une configuration telle que les conditions suivantes ont été remplies :
   (i) le groupe auxiliaire de puissance était dans un état opérationnel « allumé », et
   (ii) le circuit d'alimentation en carburant était dans un mode de fonctionnement dit de « ravitaillement d'un réservoir de compensation », et
   (iii) le réservoir de compensation avait un statut de remplissage en carburant dit « vide »,
- et à chaque fois que le circuit d'alimentation en carburant a été dans ladite configuration, déterminer une durée pendant laquelle ladite configuration a été maintenue et, lorsque ladite durée déterminée est supérieure à un premier seuil prédéterminé, alors enregistrer un évènement indiquant que ladite durée déterminée a été supérieure au premier seuil prédéterminé,
- déterminer, pour ladite période prédéterminée, un nombre d'évènements enregistrés, et si ledit nombre d'évènements déterminé est supérieur à un deuxième seuil prédéterminé, alors générer un message d'alerte.

De façon particulière, le dispositif de surveillance est installé dans un centre opérationnel ou dans un centre de maintenance situé au sol, recevant des données d'exploitation de l'aéronef.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1A et la figure 1B illustrent schématiquement des exemples d'alimentation en carburant de l'APU selon différents modes de fonctionnement ;
La figure 2 illustre sous forme de graphique une durée d'une configuration du circuit d'alimentation en carburant d'un APU susceptible de précéder un arrêt soudain de l'APU, avant et après remplacement du pressostat du circuit d'alimentation en carburant ;
La figure 3 illustre sous forme de diagramme les étapes d'un procédé de surveillance d'un équipement d'un circuit d'alimentation en carburant d'un APU, selon un mode de réalisation ;
La figure 4 illustre schématiquement un exemple d'architecture matérielle d'un dispositif de surveillance selon un mode de réalisation.

### EXPOSE DETAILLE DE MODES DE REALISATION

Le principe général de la présente divulgation est de surveiller de manière indirecte un équipement d'un circuit d'alimentation en carburant d'un APU d'un aéronef, tel qu'un pressostat. Il est ainsi possible de fournir, le cas échéant, un message d'alerte lorsqu'un besoin de maintenance de cet équipement (e.g., pressostat) se fait ressentir.

Il a été préalablement constaté que la plupart des arrêts de l'APU 107 au sol pendant les opérations de ravitaillement du réservoir de compensation 106, sont précédés d'une configuration du circuit d'alimentation en carburant 100 dont les conditions sont les suivantes : l'APU 107 est maintenu dans un état opérationnel dit « allumé » alors que le circuit d'alimentation en carburant 100 est en mode de fonctionnement « ravitaillement du réservoir de compensation » (i.e., le réservoir de compensation 106 est en cours de ravitaillement) et qu'un statut du réservoir de compensation 106 est « vide », c'est-à-dire que la quantité de carburant est en dessous d'un seuil prédéterminé de quantité de carburant, noté Q, du réservoir de compensation 106.

Par la suite, cette configuration du circuit d'alimentation en carburant 100 est appelée « configuration pré-arrêt de l'APU ».

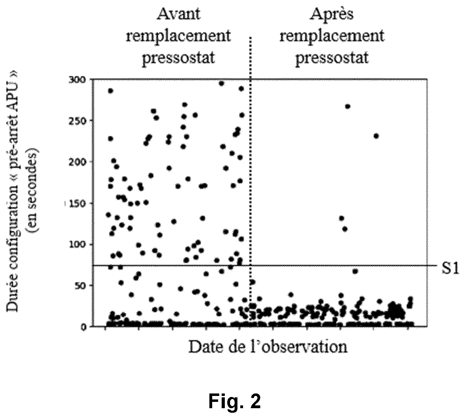

La figure 2 illustre sous forme de graphique une durée de la configuration du circuit d'alimentation en carburant de l'APU précédant un arrêt soudain de l'APU, avant et après remplacement du pressostat du circuit d'alimentation en carburant.

Selon la figure 2, avant remplacement du pressostat 103, le nombre d'arrêts soudains de l'APU 107 qui sont précédés de la configuration « pré-arrêt de l'APU » dont une durée est supérieure à un premier seuil prédéterminé S1, est supérieur au nombre d'arrêts après remplacement du pressostat 103. Autrement dit, plus la durée de cette configuration « pré-arrêt de l'APU » du circuit d'alimentation en carburant 100 est longue, plus il y a un risque d'arrêt de l'APU 107. *A contrario,* pendant l'opération de ravitaillement du réservoir de compensation 106, après remplacement du pressostat 103, la durée de la configuration « pré-arrêt de l'APU » est en dessous de premier seuil prédéterminé S1 et le nombre d'arrêts soudains de l'APU 107 diminue. Ainsi, en suivant la durée de cette configuration dite « pré-arrêt de l'APU », il est possible de surveiller de manière indirecte l'état du pressostat 103 et d'alerter, le cas échéant, sur un besoin de maintenance de cet équipement.

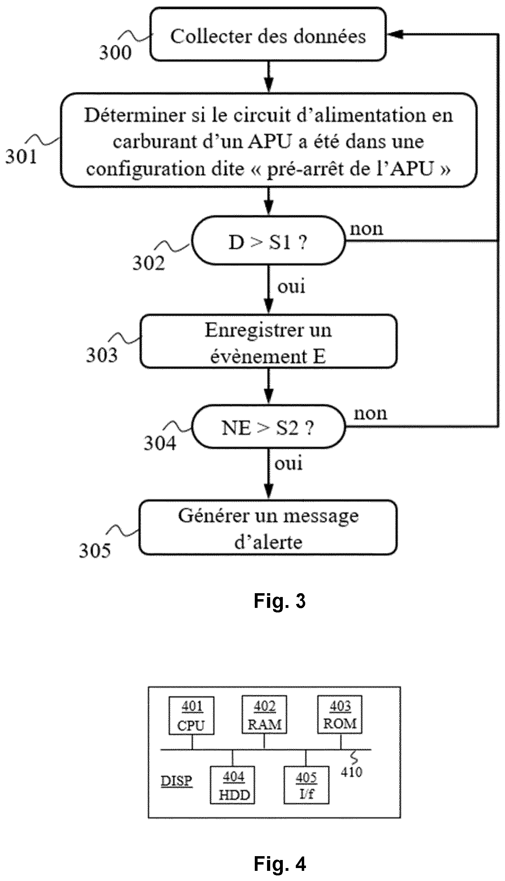

La figure 3 illustre sous forme de diagramme les étapes d'un procédé de surveillance d'un équipement, tel qu'un pressostat, du circuit d'alimentation en carburant d'un APU, selon un mode de réalisation.

Le procédé de surveillance décrit ci-après est implémenté par un dispositif de surveillance DISP présenté ci-après en lien avec la figure 4.

Tout d'abord, au cours d'une étape 300, le dispositif de surveillance DISP collecte des données en provenance d'au moins un système avionique de l'aéronef, par exemple un système de type ACMS (« *Aircraft Condition Monitoring System* » en anglais) ou de type FOMAX (« *Flight Operations & MAintenance eXchanger* » en anglais) ou RMAX (« *Retrofit Maintenance Exchanger* » en anglais). Ces données correspondent par exemple à des données transmises par l'aéronef à l'issue de chaque vol vers un centre opérationnel ou vers un centre de maintenance situé au sol, où elles sont enregistrées dans une base de données. Ces données sont ensuite collectées dans la base de données par le dispositif de surveillance DISP. Le centre opérationnel est par exemple un centre opérationnel du constructeur de l'aéronef, réalisant des prestations d'aide à la maintenance d'aéronefs appartenant à des compagnies aériennes. Le centre de maintenance est par exemple un centre de maintenance de la compagnie aérienne exploitant l'aéronef. La collecte de données, à l'étape 300, correspond à des données acquises par le système avionique de l'aéronef sur une période prédéterminée P d'acquisition de données et selon une fréquence prédéterminée F d'acquisition de données (e.g., 1Hz ou 2Hz). Dans un exemple, cette période prédéterminée P correspond à un nombre de vols de l'aéronef. Dans un autre exemple, cette durée prédéterminée P correspond à un nombre de jours.

Ainsi, pour chaque instant d'acquisition (i.e., instant défini par la fréquence prédéterminée F) de la période prédéterminée P, le dispositif de surveillance DISP obtient des données représentatives :
- d'une mesure de la vitesse de rotation de l'APU 107. Le dispositif de surveillance DISP peut ainsi déterminer l'état opérationnel de l'APU 107. En effet, si la vitesse de rotation de l'APU 107 est supérieure à 0 RPM, alors le dispositif de surveillance DISP détermine que l'état opérationnel de l'APU 107 est : « allumé », sinon l'état opérationnel est dit « éteint » (e.g., lorsque l'APU 107 s'arrête soudainement car il subit une panne sèche pendant l'opération de ravitaillement du réservoir de compensation 106 ou lorsque l'APU 107 est éteint volontairement car les systèmes de propulsion principaux sont allumés) ;
- d'un statut « ouvert » ou « fermé » de la vanne d'entrée 109 du réservoir de compensation 106. Le dispositif de surveillance DISP détermine alors que lorsque le statut de la vanne d'entrée du réservoir de compensation 106 est « ouvert », alors le réservoir de compensation 106 est en cours de ravitaillement et le mode de fonctionnement du circuit d'alimentation en carburant 100 est « ravitaillement du réservoir de compensation ». Si le statut de la vanne d'entrée 109 est « fermé » (e.g., lorsque l'opération de ravitaillement du réservoir de compensation 106 est terminée ou lorsque le pressostat 103 détecte une pression du carburant dans la conduite de ravitaillement 104 inférieure à un seuil prédéterminé et qu'il fait basculer le circuit d'alimentation en carburant 100 dans le mode « fonctionnement au sol »), alors le circuit d'alimentation en carburant 100 est dans un autre mode de fonctionnement (e.g., mode « fonctionnement au sol »), et ;
- d'une mesure de la quantité de carburant dans le réservoir de compensation 106. Le dispositif de surveillance DISP détermine alors un statut « vide » ou « non vide » du réservoir de compensation 106. Lorsque la quantité de carburant est inférieure à un seuil prédéterminé de quantité en carburant Q (par exemple 50 litres, soit environ 50 kg (110 lbs)), alors
le dispositif de surveillance DISP détermine que le statut du réservoir de compensation 106 est « vide », sinon le dispositif de surveillance DISP détermine que le réservoir de compensation est « non vide ».

Le dispositif de surveillance DISP enregistre alors les données collectées correspondant à la période prédéterminée P dans une mémoire, par exemple sous forme d'un tableau dont chaque ligne correspond à un jeu de données collectées correspondant à un instant d'acquisition particulier de la période prédéterminée P (e.g. une ligne par seconde si la fréquence prédéterminée F est de 1 Hz), les données étant représentatives, pour cet instant :
- d'une mesure de la vitesse de rotation de l'APU 107,
- du statut de la vanne d'entrée 109 du réservoir de compensation 106, et
- d'une mesure de la quantité de carburant contenue dans le réservoir de compensation 106.

Chaque ligne est en outre être horodatée. Ainsi, chaque donnée collectée est associée, par exemple, à une date et une heure d'acquisition.

Ensuite, les données collectées sont traitées par le dispositif de surveillance DISP. En particulier, le dispositif de surveillance DISP détermine, au cours d'une étape 301, si, au cours de la période prédéterminée P d'acquisition des données, le circuit d'alimentation en carburant 100 a été dans une configuration « pré-arrêt de l'APU » telle que décrite précédemment. En particulier, le dispositif de surveillance DISP détermine que le circuit d'alimentation en carburant 100 a été dans une configuration « pré-arrêt de l'APU » lorsque l'APU 107 a été dans l'état opérationnel « allumé » alors que le mode de fonctionnement du circuit d'alimentation en carburant 100 de l'APU 107 était en mode « ravitaillement du réservoir de compensation » (i.e., réservoir de compensation 106 en cours de ravitaillement en carburant) et qu'en outre le statut du réservoir de compensation 106 était « vide ».

Il est à noter qu'au cours de la période prédéterminée P, le circuit d'alimentation en carburant 100 peut avoir été plusieurs fois dans la configuration « pré-arrêt de l'APU ».

Puis, au cours d'une étape 302, le dispositif de surveillance DISP détermine une durée, notée D, pendant laquelle cette configuration « pré-arrêt de l'APU » a été maintenue. Eventuellement, lorsqu'au cours de la période prédéterminée P le circuit d'alimentation en carburant 100 a été plusieurs fois dans la configuration « pré-arrêt de l'APU », alors le dispositif de surveillance DISP détermine, pour chaque occurrence, la durée D de la configuration « pré-arrêt de l'APU » détectée.

Dans un exemple, lorsque les données collectées sont enregistrées sous la forme d'un tableau tel que décrit précédemment, le dispositif de surveillance DISP identifie alors les lignes pour lesquelles le circuit d'alimentation en carburant 100 est dans une configuration « pré-arrêt de l'APU » et effectue ensuite une opération de filtrage afin de ne conserver que les lignes correspondant à un circuit d'alimentation en carburant 100 dans la configuration « pré-arrêt de l'APU ». Le dispositif de surveillance DISP détermine ensuite un rapport entre un nombre de lignes successives correspondant au circuit d'alimentation en carburant 100 dans la configuration « pré-arrêt de l'APU » recherchée, sur la fréquence prédéterminée d'acquisition des données. Par exemple, si la fréquence prédéterminée d'acquisition des données est de 2HZ, et que 20 lignes successives correspondent à un circuit d'alimentation en carburant 100 dans la configuration « pré-arrêt de l'APU », alors la durée D de la configuration « pré-arrêt de l'APU » est de 10s.

Dans le cas où le circuit d'alimentation en carburant 100 a été plusieurs fois dans la configuration « pré-arrêt de l'APU », le dispositif de surveillance DISP détermine pour chaque ensemble de lignes successives le rapport entre le nombre de lignes successives de l'ensemble de lignes sur la fréquence prédéterminée d'acquisition des données.

Alternativement, les données collectées étant horodatées, le dispositif de surveillance DISP détermine la durée D de la configuration « pré-arrêt de l'APU » en comparant l'horodatage des données au début (i.e., au moment où la configuration « pré-arrêt de l'APU » est détectée par le dispositif de surveillance DISP) et à la fin de la configuration « pré-arrêt de l'APU » (i.e., au moment où la configuration « pré-arrêt de l'APU » n'est plus détectée par le dispositif de surveillance DISP).

Une fois la durée D de la configuration « pré-arrêt de l'APU » déterminée, le dispositif de surveillance compare cette durée D à un premier seuil prédéterminé S1. Dans un exemple, le premier seuil prédéterminé S1 est d'environ 75 secondes. Si la durée D est supérieure au premier seuil prédéterminé S1 (résultat « oui » à l'issue de l'étape 302), alors, au cours d'une étape 303, le dispositif de surveillance DISP enregistre dans une mémoire un, noté E, indiquant qu'une durée D de la configuration « pré-arrêt de l'APU » est supérieure au premier seuil prédéterminé S1. Au contraire, si la durée D de la configuration « pré-arrêt de l'APU » est inférieure au premier seuil prédéterminé S1 (résultat « non » à l'issue de l'étape 302) alors l'étape 300 est réitérée.

Dans un mode de réalisation, si la durée D est supérieure au premier seuil prédéterminé S1, le dispositif de surveillance DISP compare d'une part l'horodatage des données collectées sur la base desquelles la durée D a été déterminée avec d'autre part l'horodatage des données collectées sur la base desquelles une durée D'du dernier événement enregistré dans la mémoire a été déterminée. Si ces horodatages sont tels qu'ils correspondent à une même utilisation de l'aéronef, alors le dispositif de surveillance DISP compare les durées D et D'. Si la durée D'est supérieure ou égale à la durée D alors le dispositif de surveillance DISP n'enregistre pas l'événement E dans la mémoire. Si la durée D est supérieure à la durée D', alors le dispositif de surveillance DISP enregistre l'événement E dans la mémoire en remplacement du dernier événement enregistré. Le fonctionnement selon ce mode de réalisation permet avantageusement de n'enregistrer au plus qu'un seul événement par utilisation de l'aéronef, à savoir l'événement pour lequel la durée est la plus élevée. Le terme utilisation de l'aéronef correspond à un vol de l'aéronef, en particulier à une partie du vol s'étendant entre d'une part un début de préparation du vol à une porte d'un aéroport de départ et d'autre part un décollage de l'aéronef sur l'aéroport de départ.

Selon un mode de réalisation, au cours d'une étape 304, le dispositif de surveillance DISP détermine, sur la période prédéterminée P d'acquisition des données, un nombre d'événements, noté NE (NE un entier supérieur ou égal à 1), correspondant au nombre d'événements enregistrés indiquant que la durée D est supérieure au premier seuil prédéterminé S1. Lorsque le nombre d'événements NE sur la période prédéterminée P est supérieur à un deuxième seuil prédéterminé S2 (résultat « oui » à l'issue de l'étape 303), alors le dispositif de surveillance DISP détermine que le pressostat 103 nécessite une action et/ou une planification de maintenance. Un message d'alerte est alors généré au cours d'une étape 305 décrite ci-après. Sinon (résultat « non » à l'issue de l'étape 304), l'étape 300 et suivantes sont répétées. Dans un exemple particulier, la période prédéterminée P correspond à 50 jours et le deuxième seuil prédéterminé S2 est égal à 10.

Selon un mode de réalisation, au cours de l'étape 305, le dispositif de surveillance DISP génère un message d'alerte comprenant une demande de maintenance à effectuer et/ou à planifier. Dans une variante, le message d'alerte comprend en outre une information représentative de la durée D de maintien de la configuration « pré-arrêt de l'APU » et/ou un nombre d'évènements NE, par exemple.

Dans un mode de réalisation, ce message d'alerte est un message textuel indiquant que le pressostat 103 nécessite une action et/ou une planification de maintenance.

Dans un mode de réalisation, ce message d'alerte est par exemple transmis par le centre opérationnel ou le centre de maintenance au sol vers une interface homme-machine à l'attention du personnel au sol (e.g., technicien/opérateur).

Le procédé de surveillance tel que décrit ci-dessus selon les différents modes de réalisation permet de surveiller de manière indirecte un équipement du circuit d'alimentation en carburant 100 de l'APU 107, tel que le pressostat 103. Autrement dit, le procédé de surveillance tel que décrit ci-dessus permet d'implémenter un procédé de maintenance d'un équipement du circuit d'alimentation en carburant 100 de l'APU 107, tel que le pressostat 103. En particulier, grâce à la génération d'un message d'alerte comprenant notamment une demande de maintenance à effectuer et/ou à planifier, un technicien/opérateur, par exemple, peut effectuer et/ou planifier cette maintenance de cet équipement (e.g., pressostat 103).

La figure 4 illustre schématiquement un exemple d'architecture matérielle du dispositif de surveillance DISP, qui comprend alors, reliés par un bus de communication 410 : un processeur ou CPU (« *Central Processing Unit »* en anglais) 401 ; une mémoire vive RAM *(« Random Access Memory »* en anglais) 402 ; une mémoire morte ROM (« *Read Only Memory* » en anglais) 403, par exemple une mémoire Flash ; un dispositif de stockage de données, tel qu'un disque dur HDD (« *Hard Disk Drive* » en anglais), ou un lecteur de support de stockage, tel qu'un lecteur de cartes SD (« *Secure Digital* » en anglais) 404 ; au moins une interface de communication 405 I/f permettant au dispositif de surveillance DISP de collecter les données reçues d'un aéronef, et d'afficher un message d'alerte dans le centre opérationnel ou le centre de maintenance au sol.

Le processeur 401 est capable d'exécuter des instructions chargées dans la RAM 402 à partir de la ROM 403, d'une mémoire externe (non représentée), d'un support de stockage, tel qu'une carte SD, ou d'un réseau de communication (non représenté). Lorsque le dispositif de surveillance DISP est mis sous tension, le processeur 401 est capable de lire de la RAM 402 des instructions et de les exécuter. Ces instructions forment un programme d'ordinateur causant l'implémentation, par le processeur 401, des comportements, étapes et l'algorithme décrits ici.

Tout ou partie des comportements, étapes et l'algorithme décrits ici peut ainsi être implémenté sous forme logicielle par exécution d'un ensemble d'instructions par une machine programmable, telle qu'un DSP (« *Digital Signal Processor* » en anglais) ou un microcontrôleur, ou être implémenté sous forme matérielle par une machine ou un composant (« *chip* » en anglais) dédié ou un ensemble de composants (« *chipset* » en anglais) dédié, tel qu'un FPGA (« *Field-Programmable Gate Array* » en anglais) ou un ASIC (« *Application-Specific Integrated Circuit* » en anglais). D'une manière générale, le dispositif de surveillance DISP comprend de la circuiterie électronique agencée et configurée pour implémenter les comportements, étapes et l'algorithme décrits ici.

## Revendications

1. Procédé de surveillance d'un équipement (103) d'un circuit d'alimentation en carburant (100) d'un groupe auxiliaire de puissance (107) d'un aéronef (500), ledit procédé étant implémenté par un dispositif de surveillance (501) sous forme de circuiterie électronique, ledit procédé étant **caractérisé en ce qu'**il comprend les étapes suivantes:
- déterminer si ledit circuit d'alimentation en carburant (100) a été, au cours d'une période prédéterminée P, dans une configuration telle que les conditions suivantes ont été remplies :
(i) ledit groupe auxiliaire de puissance (107) était dans un état opérationnel « allumé », et
(ii) ledit circuit d'alimentation en carburant (100) était dans un mode de fonctionnement dit de « ravitaillement d'un réservoir de compensation », et
(iii) ledit réservoir de compensation (106) avait un statut de remplissage en carburant dit « vide »,
- et à chaque fois que le circuit d'alimentation en carburant (100) a été dans ladite configuration, déterminer une durée D pendant laquelle ladite configuration a été maintenue et, lorsque ladite durée D déterminée est supérieure à un premier seuil prédéterminé (S1), alors enregistrer un évènement indiquant que ladite durée D déterminée a été supérieure au premier seuil prédéterminé (S1),
- déterminer, pour ladite période prédéterminée P, un nombre (NE) d'évènements enregistrés, et si ledit nombre (NE) d'évènements déterminé est supérieur à un deuxième seuil prédéterminé (S2), alors générer un message d'alerte.

2. Procédé de surveillance selon la revendication 1, dans lequel le message d'alerte comprend une demande de maintenance dudit équipement (103) à effectuer et/ou à planifier.

3. Procédé selon la revendication 1 ou 2, comprenant en outre :
- collecter des premières données, représentatives dudit état opérationnel dudit groupe auxiliaire de puissance (107) pendant ladite période prédéterminée P, lesdites premières données étant des mesures de vitesse de rotation du groupe auxiliaire de puissance (107), et déterminer que ledit groupe auxiliaire de puissance (107) est dans l'état opérationnel dit « allumé » lorsqu'une mesure de vitesse de rotation est supérieure à 0,
- collecter des deuxièmes données, représentatives dudit mode de fonctionnement dudit circuit d'alimentation en carburant (100) pendant ladite période prédéterminée P, lesdites deuxièmes données étant un statut d'une vanne d'entrée (109) du réservoir de compensation (106), et déterminer que le mode de fonctionnement est « ravitaillement du réservoir de compensation », lorsque le statut de la vanne d'entrée (109) est « ouvert »,
- collecter des troisièmes données, représentatives dudit statut de remplissage en carburant du réservoir de compensation (106) pendant ladite période prédéterminée P, lesdites troisièmes données étant des mesures de quantité de carburant dans le réservoir de compensation (106), et déterminer que le statut du réservoir est « vide » lorsque la quantité de carburant est inférieure à un seuil prédéterminé de quantité de carburant Q.

4. Procédé de surveillance selon l'une des revendications 1 à 3, dans lequel l'étape d'enregistrement d'un événement indiquant que ladite durée D déterminée a été supérieure au premier seuil prédéterminé est mise en œuvre de façon à enregistrer au plus un seul événement pour une même utilisation de l'aéronef.

5. Procédé de maintenance d'un équipement (103) d'un circuit d'alimentation en carburant (100) d'un groupe auxiliaire de puissance (107) d'un aéronef (500) comprenant :
- surveiller ledit équipement (103) selon le procédé de surveillance selon l'une quelconque des revendications 1 à 4,
- effectuer et/ou planifier une maintenance sur ledit équipement (103) quand un message d'alerte est généré par exécution du procédé de surveillance selon l'une quelconque des revendications 1 à 4.

6. Dispositif de surveillance (501) d'un équipement (103) d'un circuit d'alimentation en carburant (100) d'un groupe auxiliaire de puissance (107) d'un aéronef (500), ledit dispositif de surveillance (501) étant **caractérisé en ce qu'**il comprend de la circuiterie électronique configurée pour :
- déterminer si ledit circuit d'alimentation en carburant (100) a été, au cours d'une période prédéterminée P, dans une configuration telle que les conditions suivantes ont été remplies :
(i) ledit groupe auxiliaire de puissance (107) était dans un état opérationnel « allumé », et
(ii) ledit circuit d'alimentation en carburant (100) était dans un mode de fonctionnement dit de « ravitaillement d'un réservoir de compensation », et
(iii) ledit réservoir de compensation (106) avait un statut de remplissage en carburant dit « vide »,
- et à chaque fois que le circuit d'alimentation en carburant (100) a été dans ladite configuration, déterminer une durée D pendant laquelle ladite configuration a été maintenue et, lorsque ladite durée D déterminée est supérieure à un premier seuil prédéterminé (S1), alors enregistrer un évènement indiquant que ladite durée D déterminée a été supérieure au premier seuil prédéterminé (S1),
- déterminer, pour ladite période prédéterminée P, un nombre (NE) d'évènements enregistrés, et si ledit nombre (NE) d'évènements déterminé est supérieur à un deuxième seuil prédéterminé (S2), alors générer un message d'alerte.

## Patentansprüche

1. Verfahren zur Überwachung einer Ausrüstung (103) eines Kraftstoffversorgungskreises (100) eines Hilfstriebwerks (107) eines Luftfahrzeugs (500), wobei das Verfahren von einer Überwachungsvorrichtung (501) in Form einer elektronischen Schaltungsanordnung implementiert wird, wobei das Verfahren **dadurch gekennzeichnet ist, dass** es die folgenden Schritte umfasst:
- Bestimmen, ob der Kraftstoffversorgungskreis (100) während eines vorbestimmten Zeitraums P in einer solchen Konfiguration war, dass die folgenden Bedingungen erfüllt waren:
(i) das Hilfstriebwerk (107) war in einem "eingeschalteten" Betriebszustand, und
(ii) der Kraftstoffversorgungskreis (100) war in einer als "Betankung eines Trim-Tanks" bezeichneten Betriebsart, und
(iii) der Trim-Tank (106) hatte einen als "leer" bezeichneten Kraftstofffüllstatus,
- und jedes Mal, wenn der Kraftstoffversorgungskreis (100) in der Konfiguration war, Bestimmen einer Dauer D, während der die Konfiguration aufrechterhalten wurde, und, wenn die bestimmte Dauer D größer als ein erster vorbestimmter Schwellenwert (S1) ist, Aufzeichnen eines Ereignisses, das angibt, dass die bestimmte Dauer D größer als ein erster vorbestimmter Schwellenwert (S1) war,
- Bestimmen, für den vorbestimmten Zeitraum P, einer Anzahl (NE) von aufgezeichneten Ereignissen und, falls die bestimmte Anzahl (NE) von Ereignissen größer als ein zweiter vorbestimmter Schwellenwert (S2) ist, Erzeugen einer Warnmeldung.

2. Überwachungsverfahren nach Anspruch 1, wobei die Warnmeldung eine Anforderung einer durchzuführenden und/oder zu planenden Wartung der Ausrüstung (103) umfasst.

3. Verfahren nach Anspruch 1 oder 2, umfassend ferner:
- Sammeln von ersten Daten, die für den Betriebszustand des Hilfstriebwerks (107) während des vorbestimmten Zeitraums P repräsentativ sind, wobei die ersten Daten Messungen der Drehzahl des Hilfstriebwerks (107) sind, und Bestimmen, dass das Hilfstriebwerk (107) in dem als "eingeschaltet" bezeichneten Betriebszustand ist, wenn eine Drehzahlmessung größer als 0 ist,
- Sammeln von zweiten Daten, die für die Betriebsart des Kraftstoffversorgungskreises (100) während des vorbestimmten Zeitraums P repräsentativ sind, wobei die zweiten Daten ein Status eines Einlassventils (109) des Trim-Tanks (106) sind, und Bestimmen, dass die Betriebsart "Betankung des Trim-Tanks" ist, wenn der Status des Einlassventils (109) "geöffnet" ist,
- Sammeln von dritten Daten, die für den Kraftstofffüllstatus des Trim-Tanks (106) während des vorbestimmten Zeitraums P repräsentativ sind, wobei die dritten Daten Messungen der Kraftstoffmenge in dem Trim-Tank (106) sind, und Bestimmen, dass der Status des Tanks "leer" ist, wenn die Kraftstoffmenge geringer als ein vorbestimmter Kraftstoffmengenschwellenwert Q ist.

4. Überwachungsverfahren nach einem der Ansprüche 1 bis 3, wobei der Schritt des Aufzeichnens eines Ereignisses, das angibt, dass die bestimmte Dauer D größer als der erste vorbestimmte Schwellenwert war, so durchgeführt wird, dass höchstens ein einziges Ereignis für eine selbe Nutzung des Luftfahrzeugs aufgezeichnet wird.

5. Verfahren zur Wartung einer Ausrüstung (103) eines Kraftstoffversorgungskreises (100) eines Hilfstriebwerks (107) eines Luftfahrzeugs (500), umfassend:
- Überwachen der Ausrüstung (103) gemäß dem Überwachungsverfahren nach einem der Ansprüche 1 bis 4,
- Durchführen und/oder Planen einer Wartung an der Ausrüstung (103), wenn eine Warnmeldung durch Ausführen des Überwachungsverfahrens nach einem der Ansprüche 1 bis 4 erzeugt wird.

6. Überwachungsvorrichtung (501) für eine Ausrüstung (103) eines Kraftstoffversorgungskreises (100) eines Hilfstriebwerks (107) eines Luftfahrzeugs (500), wobei die Überwachungsvorrichtung (501) **dadurch gekennzeichnet ist, dass** sie eine elektronische Schaltungsanordnung umfasst, die ausgelegt ist zum:
- Bestimmen, ob der Kraftstoffversorgungskreis (100) während eines vorbestimmten Zeitraums P in einer solchen Konfiguration war, dass die folgenden Bedingungen erfüllt waren:
(i) das Hilfstriebwerk (107) war in einem "eingeschalteten" Betriebszustand, und
(ii) der Kraftstoffversorgungskreis (100) war in einer als "Betankung eines Trim-Tanks" bezeichneten Betriebsart, und
(iii) der Trim-Tank (106) hatte einen als "leer" bezeichneten Kraftstofffüllstatus,
- und jedes Mal, wenn der Kraftstoffversorgungskreis (100) in der Konfiguration war, Bestimmen einer Dauer D, während der die Konfiguration aufrechterhalten wurde, und, wenn die bestimmte Dauer D größer als ein erster vorbestimmter Schwellenwert (S1) ist, Aufzeichnen eines Ereignisses, das angibt, dass die bestimmte Dauer D größer als ein erster vorbestimmter Schwellenwert (S1) war,
- Bestimmen, für den vorbestimmten Zeitraum P, einer Anzahl (NE) von aufgezeichneten Ereignissen und, falls die bestimmte Anzahl (NE) von Ereignissen größer als ein zweiter vorbestimmter Schwellenwert (S2) ist, Erzeugen einer Warnmeldung.

## Claims

1. Method for surveillance of an equipment unit (103) of a fuel supply circuit (100) of an auxiliary power unit (107) of an aircraft (500), said method being implemented by a surveillance device (501) in the form of electronic circuitry, said method being **characterized in that** it comprises the following steps:
- determining if said fuel supply circuit (100) was in a configuration during a predetermined period P such that the following conditions were fulfilled:
(i) said auxiliary power unit (107) was in an "on" operating state, and
(ii) said fuel supply circuit (100) was in a so-called "trim tank fuelling" operating mode, and
(iii) said trim tank (106) had a so-called "empty" fuel filling status,
- and each time that the fuel supply circuit (100) was in said configuration, determining a duration D during which said configuration was maintained and, if said duration D determined is above a first predetermined threshold (S1), storing an event indicating that said determined duration D was above the first predetermined threshold (S1),
- determining for said predetermined period P a number of events (NE) stored and if said number of events (NE) determined is above a second predetermined threshold (S2) generating an alert message.

2. Surveillance method according to Claim 1 in which the alert message includes a request for maintenance of said equipment unit (103) to be effected and/or scheduled.

3. Method according to Claim 1 or 2, further including:
- collecting first data representing said operating state of said auxiliary power unit (107) during said predetermined period P, said first data consisting of measurements of the rotation speed of the auxiliary power unit (107), and determining that said auxiliary power unit (107) is in the so-called "on" operating state if a rotation speed measurement is greater than 0,
- collecting second data representing said operating mode of said fuel supply circuit (100) during said predetermined period P, said second data consisting of the status of an inlet valve (109) of the trim tank (106), and determining that the operating mode is the "trim tank fuelling" mode if the status of the inlet valve (109) is "open",
- collecting third data representing said fuel filling status of the trim tank (106) during said predetermined period P, said third data consisting of measurements of the quantity of fuel in the trim tank (106), and determining that the status of the tank is "empty" if the quantity of fuel is below a predetermined fuel quantity Q threshold.

4. Surveillance method according to one of Claims 1 to 3 in which the step of storing an event indicating that said duration D determined as being above the first predetermined threshold is carried out so as to store at most only one event for the same use of the aircraft.

5. Method for maintenance of an equipment unit (103) of a fuel supply circuit (100) of an auxiliary power unit (107) of an aircraft (500), said method including:
- surveillance of said equipment unit (103) by the surveillance method according to any one of Claims 1 to 4,
- carrying out and/or scheduling maintenance on said equipment unit (103) if an alert message is generated on executing the surveillance method according to any one of Claims 1 to 4.

6. Device (501) for surveillance of an equipment unit (103) of a fuel supply circuit (100) of an auxiliary power unit (107) of an aircraft (500), said surveillance device (501) being **characterized in that** it includes electronic circuitry configured:
- to determine if said fuel supply circuit (100) was in a configuration during a predetermined period P such that the following conditions were fulfilled:
(i) said auxiliary power unit (107) was in an "on" operating state, and
(ii) said fuel supply circuit (100) was in a so-called "trim tank fuelling" operating mode, and
(iii) said trim tank (106) had a so-called "empty" fuel filling status,
- and each time that the fuel supply circuit (100) was in said configuration, to determine a duration D during which said configuration was maintained and, if said duration D determined is above a first predetermined threshold (S1), to store an event indicating that said determined duration D was above the first predetermined threshold (S1),
- to determine for said predetermined period P a number of events (NE) stored and if said number of events (NE) determined is above a second predetermined threshold (S2) generating an alert message.
